# DEMANDE DE BREVET EUROPEEN

(11) **EP 4 668 753 A1**
(43) Date de publication de la demande: **24.12.2025**
(21) Numéro de dépôt: 25181860.5
(22) Date de dépôt: 10.06.2025
(51) Int. Cl.: H04N 21/214

(54) **STREAMING VIDÉO AVEC SEGMENT DE SUBSTITUTION DANS UN ENVIRONNEMENT DE TRANSPORT PARTAGÉ**

(30) Priorité: 17.06.2024 FR 2406439
(71) Demandeur: Groupe Canal +, 92863 ISSY-LES-MOULINEAUX CEDEX 9 (FR)
(72) Inventeur: NAUD, Pierre-Louis, 92863 ISSY-LES-MOULINEAUX (FR)
(74) Mandataire: Casalonga

(57) **Abrégé**

Pour éviter qu'un lecteur de contenu embarqué dans un train ne tombe en erreur, un agent de streaming 162 coopère avec une unité de cache 161 pour fournir des segments média stockés, une unité de manifest 169 pour fournir des fichiers descriptifs de piste 125 et des fichiers manifest de pilotage 126, une unité de surveillance 163 pour déterminer la qualité d'une connexion avec un CDN source externe, une unité de description 165 pour obtenir une description textuelle de segments média demandés, et une unité de substitution 164 pour obtenir des segments de substitution, par exemple par génération par IA générative à partir de la description textuelle et optionnellement d'autres segments du même contenu média. L'agent de streaming 162 substitue un segment média demandé par le lecteur par un segment de substitution lorsqu'une qualité de connexion avec le CDN source externe est insuffisante pour fournir les segments média d'origine.

## Description

### Domaine de l'invention

La présente invention concerne le domaine de la diffusion continue ou « streaming » de contenus, typiquement multimédia.

### Techniques antérieures

Le streaming est utilisé pour visionner ou écouter des contenus média en ligne, sans avoir à télécharger de fichier dans le dispositif de restitution (téléphone, tablette, ordinateur, lunettes de réalité augmentée ou virtuelle, etc.). Le streaming fonctionne entre deux parties : d'un côté, un client équipé d'un lecteur de contenu au niveau du dispositif de restitution d'un utilisateur final et, de l'autre, un serveur (ou plusieurs serveurs regroupés en réseau de diffusion de contenus ou « CDN » pour « *Content Delivery Network* ») qui met à disposition les contenus média.

Le streaming adaptatif de contenus, de type HLS (pour « HTTP Live Streaming » d'Apple - nom commercial) ou DASH (pour « Dynamic Adaptive Streaming over HTTP » - nom commercial, également connu sous l'appellation MPEG-DASH) par exemple, est nativement conçu pour s'adapter à la qualité de la connexion entre le client et le serveur à un instant T, mais aussi pour s'adapter aux fluctuations de la bande passante et de la qualité de la connexion au fil du temps.

Un même contenu média est classiquement proposé, dans un fichier descriptif (connu sous l'appellation « master playlist », « media playlist », « manifest » ou encore ou « MPD » pour « Media Presentation Description »), selon plusieurs qualités (ou « pistes ») au choix du lecteur de contenu qui « s'adapte » de façon dynamique en basculant d'une qualité à l'autre, par exemple lors d'une variation à la baisse ou à la hausse de la bande passante disponible, conduisant, après un temps de détection, à une baisse ou à une hausse de qualité audio/vidéo restituée à l'utilisateur.

La qualité la plus basse disponible d'un contenu média permet d'autoriser une baisse substantielle de la qualité de la connexion. Néanmoins, lorsque la baisse de qualité de la connexion est encore plus importante, tel est le cas d'une coupure de connexion, la lecture du contenu média ne peut plus se poursuivre, même dans sa qualité la plus basse.

Le lecteur de contenu peut alors tomber en erreur et arrêter la lecture, nécessitant de relancer cette dernière ultérieurement, ou de se mettre en attente de la réception d'une quantité suffisante de données (mécanisme de « buffering ») pendant une durée indéfinie avant soit d'arrêter la lecture (en cas de quantité insuffisante), soit de reprendre la lecture en « accéléré » afin de rattraper progressivement le direct, ou en conservant le décalage temporaire, ou en effectuant un saut temporel pour retourner sur le direct.

Ces mécanismes d'interruption de la lecture ne sont pas satisfaisants dans la mesure où l'expérience utilisateur est mauvaise.

Ils sont encore plus déstabilisants dans le cas des transports (voiture, train, avion, vaisseau spatial, etc.), domaine dans lequel la qualité de connexion fluctue fréquemment dans le temps.

En effet, un véhicule, lorsqu'il se déplace, peut traverser des zones plus ou moins couvertes par un réseau de communication (par exemple selon la présence ou l'éloignement des stations de base) faisant varier la qualité de la connexion. C'est pourquoi il est prévu d'équiper des véhicules d'un (ou plusieurs) serveur de cache embarqué pour récupérer de façon anticipée et stocker localement tout ou partie des contenus du CDN externe, et ainsi permettre aux passagers d'accéder à ceux-ci plus facilement. Un CDN « embarqué » dans le véhicule est donc instancié, lequel gère le serveur de cache et répond aux sollicitations des lecteurs de contenu pour offrir le service de streaming, via un réseau local (généralement le Wifi - nom commercial) à l'intérieur du véhicule.

Or, l'utilisateur peut à la fois utiliser le réseau local du véhicule qui est de bonne qualité et en même temps subir une interruption de la lecture lorsque par exemple la connexion entre le véhicule et le CDN externe ne permet pas de récupérer les données média non stockées localement à lire. Le lecteur de contenu arrête donc la lecture ou se mettant en attente, alors que l'utilisateur perçoit un réseau (local) parfaitement fonctionnel. La situation n'est donc pas satisfaisante.

Des solutions ont été proposées, par exemple par la publication EP4093039, consistant pour le lecteur de contenu à afficher une ressource multimédia (image par exemple) pendant le chargement de la vidéo demandée par l'utilisateur. Ces solutions ne sont pas satisfaisantes dans la mesure où elles nécessitent une adaptation du lecteur de contenu. En outres, elles conduisent à une interruption de la lecture de la vidéo demandée.

### Exposé de l'invention

Aussi, il existe le besoin d'un système amélioré de streaming qui réduise les risques que le lecteur de contenu tombe en erreur, sans modifier le lecteur. L'expérience utilisateur s'en trouverait améliorée.

Dans ce dessein, il est proposé un système de streaming de contenus média stockés sur un serveur de diffusion en continu, le système comprenant un agent de streaming configuré pour obtenir des segments média d'un contenu média du serveur de diffusion et pour transmettre un segment média en réponse à chaque requête de segment média par un lecteur de contenu, système dans lequel le segment média transmis est un segment de substitution différent du segment média demandé lorsqu'une qualité de connexion avec le serveur de diffusion en continu est insuffisante (notamment pour l'obtention du segment média demandé auprès du serveur). Le segment de substitution est un segment média au sens où le lecteur de contenu l'interprète comme s'il s'agissait du segment média demandé.

En configurant l'agent de streaming pour gérer en amont les manques de données média du lecteur de contenu, ce dernier n'est pas averti d'un éventuel problème de connexion et peut poursuivre la lecture du contenu comme si de rien était à partir des segments de substitution transmis. Aussi, les lecteurs de contenu déjà déployés sur les nombreux terminaux utilisateurs n'ont pas besoin d'être modifiés.

Bien entendu, lorsque la situation de connexion redevient nominale, l'agent de streaming peut reprendre la transmission des segments média demandés, permettant l'affichage de la bonne vidéo, audio, sous-titre sur le terminal utilisateur.

Corrélativement, il est également proposé un procédé de streaming de contenus média stockés sur un serveur de diffusion en continu, le procédé comprenant, au niveau d'un agent de streaming, les étapes suivantes :
obtenir des segments média d'un contenu média du serveur de diffusion ; et
transmettre un segment média en réponse à chaque requête de segment média par un lecteur de contenu, procédé dans lequel le segment média transmis est un segment de substitution différent du segment média demandé lorsqu'une qualité de connexion avec le serveur de diffusion en continu est insuffisante

Des caractéristiques facultatives des modes de réalisation de l'invention sont définies dans les revendications annexées. Certaines de ces caractéristiques sont expliquées ci-dessous en référence à un système, tandis qu'elles peuvent être transposées en caractéristiques de procédé.

Dans un mode de réalisation, le segment de substitution est stocké à l'URL (localisateur uniforme de ressource) du segment média demandé. De façon connue, il s'agit de l'URL indiqué dans la piste sélectionnée par le lecteur dans le fichier manifest descriptif du contenu média. L'agent de streaming substitue donc directement le segment média demandé (non disponible) par le média de substitution.

Cette disposition est avantageusement mise en œuvre par un serveur de cache (ou proxy) distinct du serveur de diffusion en continu et embarqué soit dans l'équipement utilisateur soit dans un véhicule dans lequel se trouve l'équipement utilisateur. Elle permet ainsi d'utiliser les fichiers manifest descriptifs originaux non modifiés (du serveur de diffusion), notamment lorsque ceux-ci ne sont pas rechargés par le lecteur pendant la lecture du contenu média (typiquement pour du contenu VOD).

Dans un autre mode de réalisation, le segment de substitution est stocké à un URL de substitution différent de l'URL du segment média demandé, et un fichier manifest descriptif du contenu média est modifié pour référencer l'URL de substitution en lieu et place de l'URL du segment média demandé, avant transmission du fichier manifest descriptif au lecteur de contenu. Le fichier manifest modifié peut être un fichier descriptif de piste dans le cas du format HLS, ou être le fichier MPD dans le cas du format DASH.

Cette disposition permet avantageusement de rediriger aisément les demandes du lecteur de contenu vers les segments de substitution, notamment pour des contenus en direct (live) pour lesquels le fichier manifest descriptif d'une portion seulement du contenu est rechargé régulièrement par le lecteur de contenu.

Dans un autre mode de réalisation, le segment de substitution est stocké à un URL de substitution déclaré dans un fichier manifest descriptif du contenu média, en lien avec une piste descriptive (du contenu média) associée à un identifiant de chemin de substitution différent d'un identifiant de chemin principal associé à une autre piste descriptive référençant l'URL du segment média demandé, et un fichier manifest de pilotage (connu comme définissant une liste ordonnée d'un ou plusieurs identifiants de chemin associés aux pistes descriptives du contenu média pour prioriser l'accès aux pistes par le lecteur de contenu selon ledit ordre de la liste) indiquant l'identifiant de chemin de substitution est transmis au lecteur de contenu. Cette disposition fait appel au mécanisme connu sous l'appellation de « Content Steering ». A nouveau, le fichier manifest modifié peut être un fichier descriptif de piste dans le cas du format HLS, ou être le fichier MPD dans le cas du format DASH.

L'identifiant de chemin de substitution peut ainsi définir un CDN virtuel de substitution transmettant des segments de substitution différents de ceux des contenus média. Cette disposition permet de rediriger le lecteur de contenu vers le CDN virtuel de substitution pour obtenir le segment média de substitution. Avantageusement, le fichier manifest de pilotage étant rechargé régulièrement par le lecteur de contenu, il est possible d'adapter dynamiquement la redirection du lecteur de contenu selon l'évolution de la qualité de la connexion avec le serveur de diffusion en continu.

Cette redirection peut être effectuée à titre principal. Dans ce cas, l'identifiant de chemin de substitution est indiqué en premier dans le fichier manifest de pilotage.

Elle peut aussi être effectuée à titre subsidiaire, c'est-à-dire en cas de défaillance - détectée par le lecteur de contenu - d'un ou plusieurs autres CDNs à fournir les segments demandés. Dans ce cas, l'identifiant de chemin de substitution est indiqué après l'identifiant de chemin principal dans le fichier manifest de pilotage.

Dans un mode de réalisation particulier, une pluralité de segments alternatifs de substitution sont stockés à des URL de substitution respectifs et déclarés dans le fichier manifest descriptif, en lien avec des pistes descriptives respectives associées à des identifiants de chemin de substitution différents,
l'agent de streaming étant configuré pour sélectionner un identifiant de chemin de substitution ou un ordre d'identifiants de chemin de substitution en fonction d'une information de qualité de connexion et/ou d'une disponibilité d'un segment alternatif de substitution, et pour indiquer l'identifiant ou l'ordre sélectionné dans le fichier manifest de pilotage,

Par exemple, des segments de substitution différents peuvent être choisis et affichés selon des causes différentes de mauvaise connexion, par exemple un passage dans un tunnel ou à une perte de connexion inconnue. De même, si un segment de substitution ne peut être généré, par exemple en raison de l'absence de description textuelle du contenu média (comme décrit par la suite), l'identifiant de chemin de substitution correspondant n'est pas sélectionnable.

Cette disposition permet un pilotage dynamique plus précis, aux fins d'améliorer l'expérience utilisateur.

Dans un mode de réalisation, l'agent de streaming est hébergé dans un serveur de cache embarqué dans un véhicule, et le lecteur de contenu est embarqué dans un équipement utilisateur connecté au serveur de cache via un réseau local du véhicule.

Dans un autre mode de réalisation, l'agent de streaming est embarqué dans le même équipement utilisateur que le lecteur de contenu.

Dans un mode de réalisation, le système comprend une unité de surveillance embarquée dans un véhicule et configurée pour déterminer une information de qualité de connexion entre le véhicule et le serveur de diffusion en continu et transmettre l'information de qualité de connexion à l'agent de streaming.

A titre d'exemple, il peut s'agir de déterminer une bande passante disponible pour le contenu média dans une liaison de communication entre le véhicule et le serveur de diffusion externe. Cette information permet alors de déterminer lorsque la bande passante disponible passe sous la bande passante associée à la qualité minimale offerte par les pistes du contenu média déterminée, c'est-à-dire lorsque la bande passante devient insuffisante. Elle permet donc de déterminer quand utiliser un segment de substitution.

Dans un mode de réalisation, le système comprend une unité de description configurée pour obtenir une description textuelle du segment média demandé ou du contenu média, et une unité de substitution configurée pour générer un segment de substitution à partir de la description textuelle. Cette génération peut typiquement être réalisée à l'aide d'un moteur d'intelligence artificielle générative d'images, de vidéos ou d'audio. Cette disposition améliore l'expérience utilisateur en poursuivant l'avancée du contenu média rendu.

Dans un mode de réalisation particulier, l'unité de substitution est configurée pour générer le segment de substitution à partir également d'un ou plusieurs autres segments média du contenu média, par exemple des segments obtenus qui précèdent le segment média demandé dans le contenu média. Il peut s'agir de segments audio, vidéo, sous-titres déjà chargés. Cette combinaison de plusieurs sources permet une génération « multimodale » du segment de substitution qui améliore la qualité du segment de substitution, pour une meilleure expérience utilisateur. Par exemple, les autres segments média permettent une génération de segments de substitution qui conserve un même timbre de voix, une même musique d'ambiance, un style cinématographique, etc.

Dans un autre mode de réalisation, un segment de substitution comprend un message informatif ou un compte à rebours, corrélé à l'information de qualité de connexion.

En particulier, le système peut comprendre une unité de surveillance embarquée dans un véhicule et configurée pour déterminer une durée d'interruption de connexion avec le serveur de diffusion en continu, ledit compte à rebours étant défini par rapport à la durée d'interruption.

Dans un mode de réalisation particulier, l'agent de streaming est configuré pour sélectionner un segment de substitution parmi la liste suivante, en fonction d'une information de qualité de connexion et/ou d'une disponibilité des segments de substitution de la liste :
un segment de substitution comprenant un message informatif,
un segment de substitution comprenant un compte à rebours, et
un segment de substitution généré à partir de la description textuelle du segment média demandé ou du contenu média, et optionnellement à partir également d'un ou plusieurs autres segments média du contenu média.

La présente invention vise également un programme informatique comportant des instructions pour la mise en œuvre du procédé ci-dessus, lorsque ce programme est exécuté par un processeur.

Ce programme peut utiliser n'importe quel langage de programmation (par exemple, un langage objet ou autre), et être sous la forme d'un code source interprétable, d'un code partiellement compilé ou d'un code totalement compilé.

L'invention vise également un support d'enregistrement non transitoire lisible par un ordinateur sur lequel est enregistré un programme pour la mise en œuvre du procédé ci-dessus, lorsque ce programme est exécuté par un processeur.

Au moins une partie des procédés selon l'invention peut être mise en œuvre par ordinateur. En conséquence, la présente invention peut prendre la forme d'un mode de réalisation entièrement matériel, d'un mode de réalisation entièrement logiciel (comportant les microprogrammes, les logiciels résidents, les microcodes, etc.) ou d'un mode de réalisation combinant des aspects logiciels et matériels qui peuvent tous être globalement appelés ici "circuit", "module" ou "système". De plus, la présente invention peut prendre la forme d'un produit de programme informatique incorporé dans tout support d'expression tangible disposant d'un code de programme utilisable par ordinateur incorporé dans le support.

Étant donné que la présente invention peut être mise en œuvre dans un logiciel, la présente invention peut être incorporée sous forme de code lisible par ordinateur pour être fournie à un appareil programmable sur tout support adapté. Un support tangible ou non transitoire peut comprendre un support de stockage tel qu'un lecteur de disque dur, un dispositif de bande magnétique ou un dispositif de mémoire à semi-conducteurs et analogues. Un support transitoire peut comporter un signal tel qu'un signal électrique, un signal électronique, un signal optique, un signal acoustique, un signal magnétique ou un signal électromagnétique, par exemple un signal hyperfréquence ou RF (radiofréquence).

### Brève description des dessins

D'autres caractéristiques, détails et avantages de l'invention apparaîtront à la lecture de la description détaillée ci-après. Celle-ci est purement illustrative et doit être lue en regard des dessins annexés, sur lesquels :
[Fig. 1] représente schématiquement un exemple de système de streaming vidéo adaptatif selon des modes de réalisation ;
[Fig. 2] illustre un exemple de fichier manifest descriptif ou « manifest » racine pour un contenu média ;
[Fig. 2a] illustre une extension du ficher de la Figure 2 à des pistes d'un CDN local accessible sur un serveur embarqué dans un véhicule, selon des modes de réalisation ;
[Fig. 2b] illustre une extension supplémentaire du fichier de la Figure 2 ou Figure 2a à une piste d'un CDN de substitution instancié sur le serveur embarqué, selon des modes de réalisation ;
[Fig. 3] illustre un exemple de fichier manifest de pilotage ou « steering manifest » référençant des CDN externes ;
[Fig. 4] illustre un fichier manifest de pilotage référençant un CDN virtuel local et un CDN externe, selon des modes de réalisation ;
[Fig. 4a], [Fig. 4b], [Fig. 4c] et [Fig. 4d] illustrent des fichiers manifest de pilotage référençant un ou plusieurs CDN de substitution selon des modes de réalisation ;
[Fig. 5], [Fig. 5a] et [Fig. 5b] illustrent, à l'aide d'ordinogrammes, des étapes de procédé selon des modes de réalisation ;
[Fig. 6] représente une variante de système de streaming vidéo adaptatif, selon des modes de réalisation.

### Description détaillée

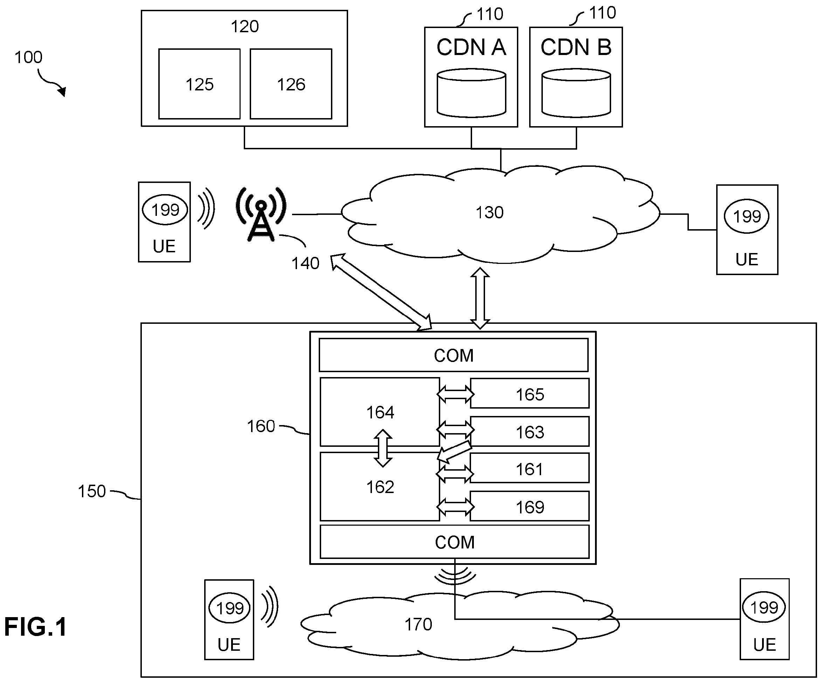

La **Figure 1** illustre un système de streaming (ou « diffusion continue ») adaptatif 100 de contenus média, tels de la vidéo à la demande (VOD) ou des programmes en direct (live). Seuls les équipements et fonctions utiles aux explications ci-dessous sont illustrés, pour simplifier les explications. Néanmoins, l'homme de l'art reconnaitra les équipements ou fonctions additionnelles qui sont classiquement utilisés pour le fonctionnement d'un système de streaming.

La représentation des équipements et fonctions est purement schématique. Un bloc ou module illustré peut être mis en œuvre au sein d'un ou plusieurs équipements physiques (type serveurs). De même, deux ou plusieurs blocs/modules illustrés peuvent être mis en œuvre au sein d'un même équipement physique.

Le système 100 comprend de façon classique un ou plusieurs réseaux publics de diffusion unicast de contenus ou « CDN » 110, un ou plusieurs serveurs 120, un réseau de communication 130 auquel sont connectés les serveurs 110, 120 et auquel peuvent se connecter des terminaux ou équipements utilisateur ou client UE dotés chacun d'un lecteur de contenu 199, et un réseau alternatif de communication par exemple un réseau de téléphonie mobile 140 interfaçant certains équipements UE avec le réseau 130.

Un CDN 110 comporte un ou plusieurs serveurs pour le stockage de contenus multimédia dans un format permettant leur diffusion en continu (streaming). Un contenu multimédia peut correspondre à un film, un documentaire, un épisode de série, un événement en direct (sportif ou non), etc.

Typiquement, un contenu média initial est encodé selon des résolutions ou qualités différentes, par exemple en une version 4K ou ultra haute définition (UHD), une version Full HD (FHD), une version haute définition (HD) et une version basse définition (SD). Bien entendu, un nombre différent de versions peut être produit ainsi que d'autres définitions. De façon similaire à ces exemples de qualités vidéo différentes, des qualités différentes peuvent être proposées pour des pistes audio. Ainsi, le contenu média initial (film, documentaire, événement sportif, etc.) peut donner naissance à N (entier) fichiers média accessibles aux utilisateurs dans le système de streaming 100.

De façon connue, un grand nombre de critères peut être utiliser pour différencier plusieurs fichiers média issus d'un même contenu média initial : par exemple, résolution, qualité, fréquence de trame, codec, langue audio, sous-titre, etc.

Les fichiers média ainsi produits sont fragmentés (empaquétés) en segments média unicast qui satisfont un format de streaming unicast, par exemple le format .ts (MPEG Transport Stream). Typiquement, les segments média d'un même fichier média portent le même nom de fichier complété par exemple d'un compteur s'incrémentant.

Les segments média (donc le fichier média d'une qualité donnée) sont stockés sous ces noms de façon permanente dans les serveurs du CDN pour permettre un accès à la demande (VOD). De façon alternative, ils sont générés (encodés) à la volée, typiquement lors d'événements en direct (live), auquel cas ils sont stockés sous ces noms de façon temporaire dans les serveurs du CDN. Un serveur peut stocker à la fois des segments de façon permanente et des segments de façon temporaire.

La Figure illustre deux CDN 110 pour la diffusion unicast des segments média correspondant aux différentes qualités de contenus média accessibles dans le système de streaming représenté. Bien entendu, un nombre différent d'un ou plusieurs CDN est envisageable.

Si la suite de la description se concentre principalement sur le streaming vidéo, des considérations similaires s'appliquent aux autres composantes d'un service multimédia, typiquement les pistes audio, sous-titrages, données interactives, etc, voire à des contenus média de type audio seulement.

Les contenus média disponibles sur les CDN sont décrits dans des fichiers (manifest) descriptifs, dont les appellations varient d'une technologie à l'autre, par exemple « master playlist », « media playlist » ou « manifest » en HLS (« HTTP Live Streaming » d'Apple - nom commercial) ou « MPD » (pour « Media Presentation Description ») en MPEG DASH (« Moving Picture Experts Group Dynamic Adaptive Streaming over HTTP » - nom commercial). Les utilisateurs finaux, typiquement les lecteurs de contenu, peuvent alors accéder à ces contenus par segments successifs via des requêtes HTTPs unicast, c'est-à-dire HTTP sécurisé, aux adresses URL (pour « Uniform Resource Locator » soit localisateur uniforme de ressource) indiquées dans ces fichiers.

Le ou les serveurs 120 stockent les fichiers descriptifs 125 des différents contenus média stockés sur les CDN 110 et accessibles aux utilisateurs. Ces serveurs réalisant la fonction de fourniture des fichiers de description 125 sont appelés serveurs de fichiers descriptifs ou « manifest ».

De façon connue, un fichier descriptif racine est généré pour chaque contenu multimédia (par exemple une chaîne TV, un titre VOD). Ce fichier de description est appelé « manifest » ou MPD dans le protocole MPEG DASH et « liste de lecture maître » (« *master playlist* ») dans le protocole HLS. Le fichier descriptif racine est typiquement généré une unique fois pour chaque contenu média VOD. Il peut cependant être généré dynamiquement pour adapter les qualités à chaque dispositif utilisateur et/ou aux conditions de réseau.

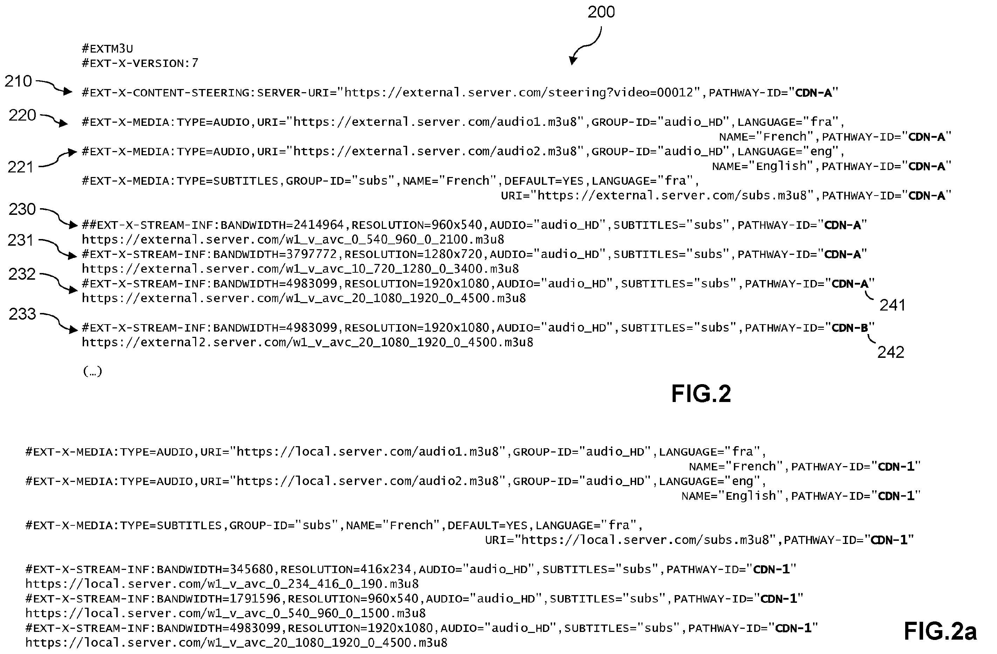

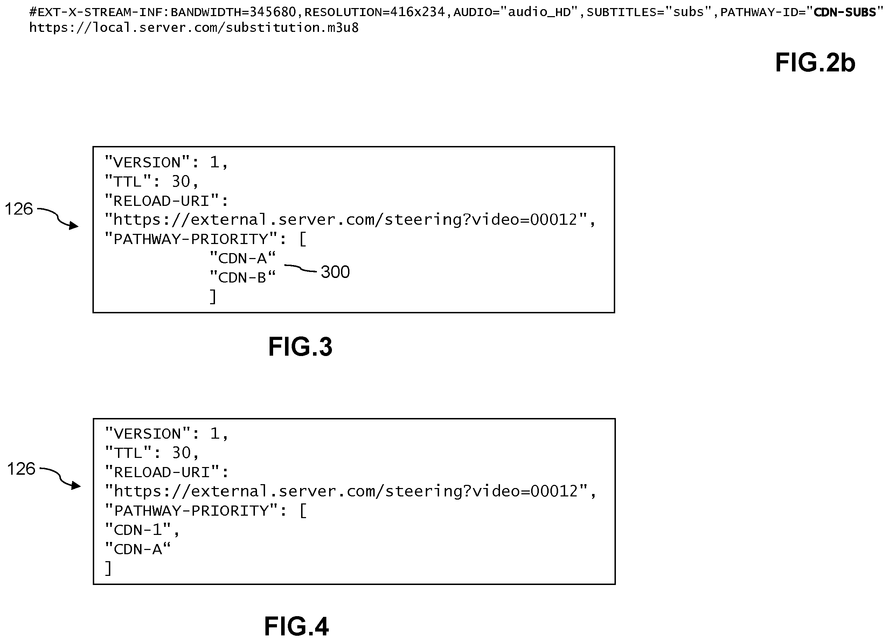

Un exemple de fichier descriptif racine 200 est illustré en **Figure 2** au format HLS. Ce fichier est simplifié aux éléments utiles, pour des raisons de clarté. En pratique, d'autres attributs sont précisés pour les pistes disponibles. Le fichier descriptif racine comprend des metadata (sur les lignes commençant par la balise #) dont certaines définissent une pluralité de pistes qui correspondent aux différents fichiers média disponibles sur le CDN 110, et donc aux différentes qualités accessibles. Chaque piste est composée d'une ligne de metadata spécifiant des attributs de ladite piste et d'une seconde ligne indiquant l'URL d'un fichier associé, descriptif des segments média constituant le fichier média.

Dans cet exemple, la piste 220 définit un contenu audio en français, dont un détail des segments média est fourni dans le fichier descriptif de piste « audio1.m3u8 » stocké sur le serveur « external.server.com » du CDN 110. De même, la piste 221 définit un contenu audio en version originale, dont un détail des segments média est fourni dans le fichier « audio2.m3u8 », et la piste 222 définit un contenu de sous-titrage en français, dont un détail des segments média est fourni dans le fichier « subs.m3u8 ». Trois pistes / qualités vidéo différentes sont proposées : la piste 230 de basse résolution SD (960x540), dont un détail des segments média est fourni dans le fichier « w1_v_avc_0_540_960_0_2100.m3u8 » stocké sur le serveur « external.server.com », la piste 231 de résolution HD (1280x720), dont un détail des segments média est fourni dans le fichier « w1_v_avc_10_720_1280_0_3400.m3u8 », et la piste 232 de résolution Full HD (1920x1080), dont un détail des segments média est fourni dans le fichier « w1_v_avc_20_1080_1920_0_4500.m3u8 ».

A chaque piste alternative dans le fichier descriptif 200 correspond donc un second fichier descriptif de contenu « m3u8 », ou « fichier descriptif de piste » ou « media playlist », qui indique les adresses web URL où le lecteur de contenu 199 obtient, par requêtes unicast, les différents segments média constituant le contenu/la piste correspondante. Ce fichier comprend un grand nombre d'éléments descriptifs correspondant à des segments média respectifs, chaque élément descriptif précisant l'URL (relatif si sur le même serveur ou absolu sinon) où est stocké le segment média correspondant. En d'autres termes, ce fichier est basiquement une playlist d'URLs.

Dans le cas d'un contenu VOD, le fichier descriptif de piste liste généralement l'ensemble des différents segments média constituant la piste, évitant au lecteur d'avoir à recharger ce fichier en cours de lecture. En revanche, il en est différemment pour les contenus média en direct car les segments média « futurs » ne sont pas encore disponibles. Aussi, plusieurs fichiers descriptifs de contenu successifs sont alors générés (ou de façon équivalente le même fichier est mis à jour), chaque fichier ajoutant une nouvelle portion du contenu média dont la diffusion est imminente.

Le cas du format DASH est légèrement différent. Le fichier descriptif racine MPD de DASH liste les différentes qualités / pistes disponibles et comporte directement, pour chacune de ces qualités / pistes, les URL où le lecteur de contenu 199 obtient, par requêtes unicast, les différents segments média de la piste. Aussi, dans le format DASH, le fichier descriptif de piste est le fichier racine MPD qui fusionne, en un seul fichier, à la fois le fichier master playlist de HLS et les multiples fichiers media playlists HLS correspondants. Les URL peuvent être des adresses absolues pour le cas où les segments média sont stockés sur un autre serveur que celui délivrant le fichier racine MPD. Le fichier MPD se trouve donc être mis à jour régulièrement en cas de contenu média en direct.

Les fichiers descriptifs sont obtenus par le lecteur de contenu 199 sur requêtes auprès du serveur 120. De façon connue, le lecteur de contenu 199 demande le fichier descriptif racine 200 d'un contenu multimédia auquel il souhaite accéder, sélectionne l'une des pistes selon la qualité/résolution souhaitée (ou supportée) et demande, dans le cas HLS, le fichier descriptif de piste correspondant à la piste sélectionnée. C'est alors qu'il peut solliciter, par requêtes unicast, le serveur correspondant aux URL du fichier descriptif de piste pour obtenir les segments média successifs, typiquement d'une piste audio, une piste vidéo et optionnellement une piste de sous-titre.

Le ou les serveurs 120 stockent également des fichiers descriptifs de pilotage ou « Content Steering » 126 pour les contenus média. Ces serveurs réalisant la fonction de fourniture des fichiers de pilotage 126 sont appelés serveurs de pilotage.

Serveurs de manifest et de pilotage peuvent être mis en œuvre au sein d'un même serveur physique 120 ou d'un groupe des mêmes serveurs physiques. En variante, serveur de manifest et serveur de pilotage sont mis en œuvre au sein de serveurs physiques distincts. Pour la suite, il est fait référence de façon générique au serveur 120, dont la fonction utilisée (manifest ou pilotage) apparaitra à la lumière de la description.

Le mécanisme de Content Steering est décrit par exemple dans le fichier https://developer.apple.com/streaming/HLSContentSteeringSpecification.pdf.

Il a été développé pour permettre d'affecter les clients à différents serveurs ou CDN afin de mieux répartir la charge entre serveurs, notamment en cas d'affluence. Il priorise donc l'accès à un CDN 110 plutôt qu'à l'autre. Un fichier manifest de pilotage ou « Steering manifest » est obtenu par les lecteurs de contenu auprès d'un serveur dédié pour un contenu média demandé.

En pratique, le fichier manifest de pilotage définit un ordre de priorité entre différents « pathway IDs » (identifiants de chemin) qui sont renseignés au niveau de chaque piste du fichier manifest descriptif de contenu, les pistes indiquant des URLs vers des serveurs variés. Un lecteur est alors contraint de basculer entre les seules pistes affectées du pathway ID considéré, en partant de celui de plus haute priorité vers celui de plus faible priorité.

Le lecteur passe donc d'un « chemin » (pathway) à un suivant, selon l'ordre des priorités dans le fichier manifest de pilotage lorsque toutes les pistes d'un chemin utilisé déclenchent des erreurs de lecture. Le lecteur bascule ainsi d'une piste non accessible correspondant à un URL sur un serveur à une autre piste opérationnelle ciblant l'URL d'un autre serveur. L'ensemble des pistes du fichier descriptif vers lesquelles le client est autorisé à passer est alors limité à celles affectées du pathway ID sélectionné par le lecteur.

Un fichier Content Steering 126 est récupéré par le lecteur de contenu 199 à l'URL indiqué dans l'élément descriptif de balise EXT-X-CONTENT-STEERING (210) du fichier descriptif racine 200 dans le cas illustré HLS. Le fichier Content Steering 126 est spécifique au contenu multimédia, celui identifié par le paramètre 'video' (video=00012 dans l'exemple de la Figure).

Le fichier Content Steering 126 opère en collaboration avec l'attribut dénommé « PATHWAY-ID » indiqué au niveau des pistes du fichier descriptif racine 200 afin de prioriser des pistes (celles portant un PATHWAY-ID spécifique) par rapport à d'autres pistes, et de façon indirecte de prioriser un CDN 110 (« external.server.com » dans l'exemple de la **Figure 2**) plutôt que d'autres CDN. En d'autres termes, l'attribut « PATHWAY-ID » n'est autre qu'un attribut de priorisation des CDN, et donc indirectement des pistes.

Pour illustrer ce fonctionnement, le fichier descriptif 200 comprend également une piste 233 similaire à la piste Full HD 232, si ce n'est que le fichier descriptif de piste (et les segments média) est stocké sur le serveur d'un autre CDN, ici « external2.server.com ». De même, des pistes audio et de sous-titrage peuvent être définies sur l'autre CDN « external2.server.com ». Les pistes 230-232 sont affectées de l'attribut PATHWAY-ID = CDN-A 241 alors que la piste 233 est affectée de l'attribut PATHWAY-ID = CDN-B 242.

La **Figure 3** illustre un exemple de fichier Content Steering 126, dans lequel la liste ordonnée d'identifiants de chemin 300 définit l'ordre de priorité des CDN, ici le CDN-A de façon prioritaire par rapport au CDN-B.

Aussi, lorsque, comme illustré sur la **Figure 2****,** des pistes sont déclarées avec des attributs PATHWAY-ID 241, 242 différents, l'un égal à « CDN-A » et l'autre à « CDN-B », le lecteur de contenu utilisateur 199 exploitant ce fichier descriptif racine 200 est autorisé à basculer entre les pistes « CDN-A » uniquement (les pistes 220, 221, 230, 231, 232 de la Figure), et passer aux pistes « CDN-B » (la piste 233) uniquement si aucune piste « CDN-A » (du même type - vidéo, audio, sous-titres) n'est disponible. Le lecteur de contenu 199 sollicite donc, dans un premier temps, uniquement le serveur « external.server.com ».

Dans le cas inverse où la liste ordonnée 300 définit CDN-B de façon prioritaire par rapport au CDN-A, l'exemple de la **Figure 2** impose d'abord l'utilisation de la piste 233, au lecteur 199.

A noter qu'en l'absence de fichier Content Steering 126 (non disponible ou pas encore obtenu ou chargé), un attribut est défini par défaut comme prioritaire, en fin de l'élément descriptif 210. Dans l'exemple, « CDN-A » est l'attribut par défaut des pistes prioritaires. En variante (e.g. en l'absence d'un tel attribut par défaut, ou si celui-ci n'est pas présent dans des pistes alternatives), l'ordre des pistes dans le fichier descriptif racine 200 peut être pris comme ordre de priorité par défaut.

Le fichier Content Steering 126 transmis aux lecteurs varie dans le temps, par exemple pour orienter certains lecteurs de contenu 199 vers un CDN 110 plutôt qu'un autre, et ainsi équilibrer la charge entre CDN. Le fichier Content Steering 126 est rechargé par un lecteur de contenu 199 (par requêtes successives auprès du serveur 120) de façon périodique, toutes les TTL secondes tel qu'indiqué dans le fichier 126. Dans l'exemple de la **Figure 3****,** TTL est fixé à 30.

Le même format de fichier Content Steering 126 est utilisé dans le protocole HLS et le protocole DASH, seuls les attributs PATHWAY-ID étant définis à des emplacements différents dans les fichiers descriptifs de contenu 125. En DASH, il peut être défini dans chaque balise <BaseURL> précisant l'URL de base d'un CDN, comme cela est proposé dans la contribution DASH « Content Steering for DASH », version 0.9.0 en date du 10 juillet 2022, disponible sur https://dashif.org/docs/DASH-IF-CTS-00XX-Content-Steering-Community-Review.pdf. A nouveau, le PATHWAY-ID permet de prioriser différents chemins aux contenus.

De retour à la **Figure 1****,** les CDN 110 sont des infrastructures classiques basées sur HTTP, typiquement des serveurs standard DASH ou HLS sécurisés (donc HTTPs). Ils réalisent une diffusion/streaming unicast des contenus, c'est-à-dire qu'ils délivrent les segments médias sur requête des lecteurs de contenu.

Les requêtes et segments média renvoyés transitent au travers du réseau public de communication 130 typiquement le réseau Internet, possiblement via un autre réseau de communication, par exemple un réseau de téléphonie mobile 140 pour le cas où le lecteur de contenu équipe un équipement utilisateur UE de type téléphone connecté au réseau 140.

La **Figure 1** illustre une adaptation du système à un environnement collectif (aéroport, gare, etc.), et notamment à un environnement mobile type transport collectif tel qu'un véhicule (train, avion, bateau/ferry, voiture, car, vaisseau spatial, etc.). Bien qu'il ne soit représenté qu'un seul environnement collectif 150, plusieurs peuvent exister simultanément dans lesquels des utilisateurs ont accès au service de streaming tel que décrit par la suite. Typiquement plusieurs trains peuvent opérer simultanément. La suite de la description s'appuie sur un environnement mobile de type train à des fins illustratives seulement. Elle s'applique donc à tout autre environnement mobile.

Comme illustré sur la Figure, le train 150 comprend un serveur de cache 160, un réseau de communication local 170 et un ou plusieurs terminaux utilisateur UE dotés de lecteurs de contenu 199. Le serveur de cache 160 et les terminaux sont connectés au réseau local 170 pour pouvoir communiquer. Le réseau de communication local 170 peut être filaire ou non, typiquement un réseau Wifi (nom commercial) embarqué. Le train est par ailleurs connecté à un réseau de communication externe, tel le réseau 130 ou 140, lui donnant accès aux serveurs externes 110 et 120.

Par la suite, la notion de « local » se rapporte aux éléments et opérations embarqués dans le train 150 par opposition aux éléments et opérations des serveurs 110 et 120.

Un terminal utilisateur UE peut prendre la forme d'un téléphone intelligent (smartphone), d'une tablette, d'un ordinateur portable ou de bureau, d'un objet connecté (télévision, montre, appareil photo, lunettes connectées, lunette ou casque de réalité augmenté ou virtuelle, etc.). Un terminal utilisateur est relié au réseau local par liaison filaire (câble Ethernet) ou sans-fil (wifi). Un terminal utilisateur, typiquement un téléphone ou une tablette, peut en outre être connectée au réseau de téléphonie mobile 140 (notamment lorsque l'utilisateur sort du train, mais également en continu si le téléphone décide de récupérer certains fichiers via réseau cellulaire). Un tel terminal a donc la possibilité de basculer d'un réseau (local) à l'autre (mobile).

L'accès au service de streaming par les lecteurs de contenu 199 peut se faire à l'aide d'une application dédiée de lecture exécutée sur le terminal utilisateur ou au travers d'un navigateur web du terminal utilisateur qui exécute ledit lecteur vidéo. Par exemple, un téléphone connecté au réseau de téléphonie mobile 140 accède au service de streaming de façon classique par requêtes unicast vers le CDN (pour récupérer les fichiers manifest 125, 126 puis les segments média).

Le serveur de cache 160 est, à l'instar des CDN 110, un serveur local de streaming, c'est-à-dire un CDN local de diffusion unicast de segments média correspondant aux contenus accessibles localement dans une unité de cache 161. Pour ce faire, il instancie, au niveau d'un agent de streaming 162, un serveur web local pour répondre aux requêtes unicast des lecteurs de contenu 199 connectés en local. Le serveur web local peut être un simple serveur http ou être monté en serveur HTTPs, c'est-à-dire sécurisé, idéalement HTTPs/2 ou HTTPs/3 avec TLS 1.3 ou ultérieur.

Les contenus accessibles localement correspondent à des contenus média proposés par les CDN externes 110, même si d'autres contenus peuvent être prévus à usage local seulement.

Des pistes disponibles localement peuvent ainsi correspondre à toute ou partie des pistes disponibles sur les CDN externes 110, pour un contenu média donné. Le serveur web local stocke donc des segments média de ces pistes (tous ou partie des segments média des pistes).

Dans un mode de réalisation, le serveur web local stocke également les fichiers descriptifs racine et les fichiers manifest descriptifs de piste correspondant aux pistes disponibles localement. Cela permet aux lecteurs de contenu de ne pas avoir à solliciter le serveur 120. En variante, les lecteurs peuvent continuer à solliciter le serveur 120 pour obtenir au moins le fichier manifest racine.

La **Figure 2a** illustre un exemple de suite du fichier manifest racine 200 de la **Figure 2** pour déclarer des pistes disponibles localement dans le train.

Dans cet exemple, le serveur web local du serveur de cache 160 est exposé sur le réseau local avec un nom de domaine dédié, ici « local.server.com » lequel peut être exposé publiquement ou ne pas être exposé publiquement. L'usage d'un nom de domaine permet un déploiement à l'identique des qualités dans plusieurs environnements 150 (trains) par une seule déclaration des pistes dans le fichier manifest racine 200 (tous les trains instancient un serveur web local avec le même nom de domaine dédié). En variante à un nom de domaine entièrement qualifié (FQDN), une adresse IP peut être utilisée, laquelle nécessite une déclaration de chaque piste, spécifique à chaque train dans le fichier manifest racine 200.

L'exposition du serveur web sous ce nom de domaine dédié, au sein du réseau local, est rendue possible par son enregistrement (en association avec l'adresse IP locale du serveur de cache 160) dans un serveur DNS local.

Dans l'exemple de la **Figure 2a****,** les pistes audio et sous-titres sont reprises en local ainsi que trois pistes vidéo, la piste SD (416x234) dont le fichier manifest de piste est « w1_v_avc_0_234_416_0_190.m3u8 » stocké sur le serveur web local « local.server.com », la piste HD (1280x720) correspondant à la piste 231 et dont le fichier manifest de piste « w1_v_avc_10_720_1280_0_3400.m3u8 » est également stocké sur le même serveur local, et la piste Full HD (1920x1080) correspondant à la piste 232 et dont le fichier manifest de piste « w1_v_avc_20_1080_1920_0_4500.m3u8 » est aussi stocké sur le même serveur. Bien entendu, un autre nombre de pistes peut être repris en local.

Pour une simplicité de mise en œuvre, les fichiers manifest de piste des CDN externes 110 et ceux locaux sont identiques (grâce à des URLs relatifs), de sorte que les segments média à fournir sont également les mêmes. Cela permet au serveur de cache 160 de récupérer les fichiers manifest de piste et segments média directement auprès des CDN externes 110. Par ailleurs, si des URL absolus sont utilisés, il suffit simplement de changer le nom de domaine du serveur dans les fichiers manifest de piste pour pointer sur le serveur local.

Dans cet exemple, c'est le fichier manifest racine 200 qui référence le serveur de cache 160, pour l'obtention des fichiers descriptifs de piste alors stockés dans l'unité de manifest 169. Dans une variante, les fichiers manifest de piste peuvent également être stockés sur le serveur externe 120. Dans ce cas, le fichier manifest racine 200 peut utiliser des URL relatifs pour l'obtention des fichiers manifest de piste sur le même serveur 120, et ce sont les fichiers manifest de piste qui référencent le serveur de cache 160 (URL absolu) pour l'obtention des segments média sur le serveur de cache. La description ci-dessous fait référence au premier cas, mais elle s'applique de façon similaire à la variante.

Le premier cas s'applique particulièrement bien aux contenus en direct (live) même s'il peut s'appliquer aux contenus à la demande, alors que la variante est adaptée aux contenus à la demande, même si elle s'applique également aux contenus en direct.

La variante correspond également au cas du DASH où le seul manifest MPD référence donc le serveur de cache 160 (URL absolu) pour l'obtention des segments média sur le serveur de cache. Pour des contenus « live » en DASH, on peut prévoir que le manifest MPD soit stocké dans l'unité de manifest 169 du serveur de cache 160 et qu'ainsi le lecteur de contenu 199 sollicite le serveur de cache 160 pour obtenir les multiples MPD successifs (ou mis à jour) descriptifs du contenu en direct.

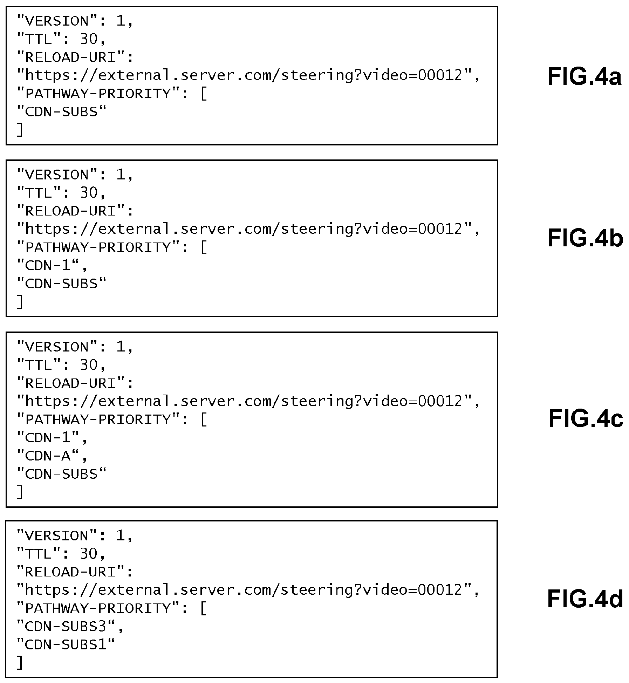

L'usage du fichier manifest de pilotage permet de prioriser les pistes externes (« CDN-A ») ou locales (« CDN-1 »). Par exemple, le fichier de la **Figure 4** impose au lecteur de contenu 199 souhaitant accéder au contenu média concerné (video=00012) de naviguer entre les pistes « CDN-1 » fournies par le CDN local « local.server.com ». Lorsque ces pistes locales ne sont pas accessibles (par exemple l'utilisateur sort du train), le lecteur de contenu 199 est autorisé à basculer sur les pistes « CDN-A » du CDN externe.

A nouveau, le fichier manifest de pilotage peut être généré et transmis par le serveur externe 120, ou être stocké (voire généré) dans l'unité de manifest 169 et transmis par le serveur de cache local 160. Dans ce deuxième cas, le fichier manifest racine 200 référence typiquement le serveur de cache 160 (URL absolu dans la balise EXT-X-CONTENT-STEERING 210) pour l'obtention du ou des fichiers manifest de pilotage sur le serveur de cache.

Compte tenu de l'espace mémoire limité dans l'unité de cache 161, il est généralement inenvisageable de stocker l'ensemble des segments média d'un catalogue complet de contenus multimédia.

Certains segments média sont préchargés dans le serveur de cache 160, typiquement en gare avant le départ du train. Dans un mode de réalisation, les segments média d'une piste SD d'un contenu média sont préchargés afin de garantir un accès au contenu média. Dans un mode de réalisation, les segments média d'une piste 4K, FHD ou HD d'un contenu média à plébisciter sont préchargés afin de garantir une expérience utilisateur satisfaisante.

Certains segments média sont chargés à la demande (à la volée), par exemple lors d'un voyage du train lorsqu'un lecteur de contenu 199 en demande la lecture ou avec un contenu en direct.

L'agent de streaming 162 est à cette fin en charge de la récupération des segments média à précharger, par exemple ceux restants d'une piste en cours de lecture, auprès du ou des CDN externes, via le réseau de communication 130 ou 140. Les segments récupérés sont stockés dans le serveur de cache 160 pour mise à disposition du lecteur de contenu 199. De préférence, l'agent de streaming 162 s'emploie à précharger l'ensemble des segments média manquants d'un contenu média en cours de lecture.

Il va de soi qu'un service de streaming n'est efficace que si la liaison de communication entre le client et le CDN externe est maintenue de bonne qualité pendant l'ensemble de la diffusion en continu. Cette liaison passe généralement par l'Internet. Or la connexion à Internet, de qualité fluctuante et réduite, est de plus partagée par un nombre grandissant d'utilisateurs, et pour des usages multiples. Il en résulte une connexion Internet généralement dégradée pour un utilisateur individuel - donc un contenu média demandé - en particulier pour des applications nécessitant un usage intensif et permanent de données.

Cette liaison de communication en amont vers les CDN externes 110 n'est donc pas nécessairement stable sur le trajet du train, subissant parfois des coupures (par exemple tunnel), voire elle n'offre pas une bande passante suffisante pour que le serveur de cache 160 obtienne l'ensemble des segments médias demandés par les terminaux utilisateur UE embarqués et puisse les servir. Les lecteurs de contenu 199 basculent, dans ce cas, vers une piste de qualité plus basse, jusqu'à ne plus être en mesure de poursuivre la lecture par manque de segments média.

Pour éviter au lecteur de contenu 199 de tomber en erreur, l'agent de streaming 162 est configuré pour transmettre un segment de substitution différent du segment média demandé lorsque la qualité de connexion avec les CDN externes 110 est insuffisante, c'est-à-dire ne permet pas au serveur de cache 160 de récupérer à temps le segment média demandé.

Dans le mode de réalisation de la **Figure 1****,** le serveur de cache 160 comprend, outre l'unité de cache 161 et l'agent de streaming 162 et l'unité de manifest 169, une unité de surveillance 163, une unité de substitution 164 et une unité de description 165. Toutes ou partie de ces unités peuvent être mises en oeuvre selon les fonctionnalités offertes par le serveur de cache 160 comme décrites par la suite.

L'unité de surveillance 163 est configurée pour déterminer en temps réel une information de qualité de connexion entre le véhicule 150 et le ou les CDN 110. On entend par « temps réel » une fréquence supérieure à celle des segments vidéo. Dans des modes de réalisation dégradés, une fréquence plus faible peut être utilisée.

L'unité de surveillance 163 peut obtenir toutes ou parties des informations suivantes :
un statut de connexion avec le CDN 110 (par exemple connexion disponible ou indisponible) ;
une bande passante disponible avec le CDN 110 ;
une bande passante allouée à un contenu média dans la liaison de communication avec le CDN 110 ; la localisation du véhicule 150 et sa vitesse.

Puis, elle peut déterminer une ou plusieurs informations de qualité de connexion à partir de ces informations. Si cette information révèle une qualité de connexion insuffisante actuelle ou future, elle peut être accompagnée d'une information de l'instant de retour à une situation nominale.

Par exemple, une disponibilité ou indisponibilité (c'est-à-dire coupure) de la connexion est obtenue à partir du statut de connexion.

Dans un autre exemple, une suffisance ou insuffisance de débit pour un client et un contenu média demandé est déterminée, selon que la bande passante disponible ou allouée soit supérieure ou inférieure à une valeur seuil. Cette dernière peut typiquement correspondre au débit minimum - i.e., de la piste de plus faible qualité - nécessaire pour le contenu média demandé. Le seuil peut être ajusté selon que des segments média du contenu sont déjà disponibles en cache 161 du serveur de cache 160 ou non. Aussi, une chaine en direct (live) peut ne pas pouvoir être lue car non priorisée sur le véhicule (pas de bande passante allouée).

En cas d'insuffisance de débit, une information de reprise de la connexion peut être déterminée, par exemple lorsqu'un plan d'allocation de ressources est fixé, permettant de savoir lorsque le contenu média va récupérer suffisamment de bande passante avec le CDN 110. Le plan d'allocation de ressources peut par exemple définir des plages temporelles où une bande passante sur la liaison de communication avec le CDN 110 est allouée à telle ou telle piste de contenu média pour le chargement en cache des segments média correspondants.

Dans un autre exemple, une entrée (ou proximité) ou non dans une zone blanche (tunnel, absence de réseau) peut être déterminée à partir de la localisation du véhicule et d'une cartographie connue à l'avance des zones blanches sur le trajet du véhicule. A noter qu'une information de durée de zone blanche (et donc de sortie de la zone) peut être déterminée à l'aide de la vitesse du véhicule compte tenu de la longueur de la zone blanche sur la cartographie.

Cette information de qualité de connexion est transmise en temps réel à l'agent de streaming 162 afin que ce dernier puisse décider d'utiliser, immédiatement ou dans un instant futur, un segment de substitution en cas de qualité de connexion insuffisante présente ou future, ou de reprendre la transmission des segments média demandé en cas de retour à une situation nominale. C'est cette information, dont ne dispose pas le lecteur vidéo 199, qui permet d'anticiper une erreur de lecture de ce dernier.

L'agent de streaming 162 obtient le segment de substitution (différent du segment média demandé) auprès de l'unité de substitution 164, par exemple lorsque l'information de qualité de connexion obtenue de l'unité de surveillance 163 révèle une qualité insuffisante pour servir les segments média d'un contenu média demandé.

L'unité de substitution 164 peut stocker des segments média de substitution par défaut, typiquement incluant un message générique d'attente, ou générer les segments de substitution à la demande, typiquement selon l'information de qualité de connexion voire selon une description textuelle du segment média demandé (et non servi) ou du contenu média concerné.

Le segment de substitution retourné par l'unité de substitution 164 a vocation à se substituer au segment média demandé. Aussi, le segment de substitution choisi ou généré par l'unité de substitution 164 présente des caractéristiques semblables à celles du segment média demandé, en termes de codec, débit, résolution, fréquence de trames, etc. Ces caractéristiques (ou options de génération) sont par exemple définies à l'avance ou indiquées dans la piste 220, 221, 230, 231, 232, 233 demandée.

Aussi, plusieurs segments de substitution ayant le même contenu média de substitution (message, vidéo, audio, etc.) mais correspondant à plusieurs configuration d'encodage/résolution peuvent être obtenus par ou stockés dans l'unité de substitution 164. En variante ou combinaison, cette unité comprend des moyens de génération (encodage, non illustrés) de segments de substitution à partir de contenu média de substitution.

C'est donc le contenu média du segment de substitution (contenu média de substitution) qui diffère de celui du segment média demandé. En cas de segment média demandé de type audio, le contenu média de substitution peut être une absence d'audio, un audio générique d'attente, une explication orale possiblement corrélée à l'information de qualité insuffisante de connexion. En cas de segment média demandé de type sous-titre, le contenu média de substitution peut être une absence de sous-titre, un sous-titre générique d'attente, ou une explication écrite possiblement corrélée à l'information de qualité insuffisante de connexion. En cas de segment média demandé de type vidéo, le contenu média de substitution peut être une vidéo générique d'attente, ou une vidéo explicative possiblement corrélée à l'information de qualité insuffisante de connexion. L'explication (audio, sous-titre ou vidéo) peut notamment indiquer la nature de la qualité insuffisante de connexion (coupure, tunnel, contenu média non prioritaire, etc.) et/ou indiquer un instant de reprise de la lecture normale. Typiquement, un compte à rebours peut être inclus dans le contenu média de substitution, lequel compte à rebours est établi sur la base de l'information de l'instant de retour à une situation nominale fourni par l'unité de surveillance 163. Un tel compte à rebours indique la durée d'interruption de la connexion avec le CDN 110.

Dans un mode de réalisation, l'unité de substitution 164 utilise un moteur génératif d'intelligence artificielle pour générer le segment de substitution à partir d'une description textuelle du segment média demandé ou du contenu média. On parle ici de la génération du contenu du segment média. Ces moteurs d'IA génératifs d'images ou d'audio sont connus de l'homme de l'art. Ils permettent d'améliorer la qualité perçue par l'utilisateur des segments de substitution.

L'unité de description 165 est configurée pour récupérer, du CDN 110 (ou tout serveur équivalent), la description textuelle. Cette description textuelle peut être réalisée par une analyse du contenu vidéo/audio, en utilisant des outils tels que Valossa (non commercial) permettent de générer une transcription détaillée d'un contenu média.

Pour un contenu VOD ou un contenu « live » en stock, la transcription complète du contenu peut être réalisée en amont, de préférence avec une transcription séquentielle segment média par segment média (ou groupe de segments média par groupe de segment média) afin de disposer d'une description textuelle qui est contextuelle de chaque segment média. Les descriptions textuelles de ces contenus peuvent être préchargées dans l'unité de description 165.

Pour un contenu live d'un événement en direct, la transcription est réalisée progressivement, segment média par segment média (ou groupe de segments média par groupe de segment média). Les descriptions textuelles des contenus live sont donc chargées progressivement dans l'unité de description 165, pendant la lecture de ces contenus.

Il existe toujours un délai (ou retard) plus ou moins long entre l'événement en direct et la fourniture du contenu média correspondant, permettant de réaliser cette transcription et d'envoyer la description textuelle au serveur de cache 160. Le retard lié au traitement vidéo (encodage, encapsulation, temps de transmission depuis le site d'enregistrement vers les serveurs) correspond typiquement à plusieurs segments média. Un délai de l'ordre de 30 secondes est classiquement constaté. Dans certaines solutions techniques visant à réduire les risques de coupure, ce retard inhérent à la technologie de diffusion est volontairement allongé, par exemple pouvant atteindre plusieurs minutes. De préférence, les descriptions textuelles des contenus live sont transmises via un chemin prioritaire à faible latence, pouvant être un autre réseau de communication que celui utilisé pour récupérer les segments média auprès du CDN 110. C'est notamment le cas pour des contenus live d'évènements filmés en direct. En revanche pour des diffusions live de contenus en stock, les descriptions textuelles peuvent être transmises à l'avance, comme pour des contenus à la demande.

Les descriptions textuelles sont horodatées (relativement au contenu média concerné) afin de permettre leur identification rapide pour un segment média demandé.

Lorsque l'unité de substitution 164 doit générer un segment de substitution, elle récupère la description textuelle du segment média demandé (grâce à l'horodatage) puis exécute le moteur d'IA génératif avec cette description pour obtenir le segment média.

Dans un mode de réalisation, le moteur d'IA génératif reçoit également en entrée un ou plusieurs autres segments média du même contenu média, par exemple des segments média précédant le segment média demandé dans la même piste ou des segments média simultanés mais d'un autre type (par exemple un segment média de sous-titres pour générer un média segment vidéo ou audio). On obtient ainsi une génération multimodale du segment de substitution. Cela permet d'améliorer la qualité des segments de substitution générés, et de rendre le contenu généré encore plus proche de l'original pour l'utilisateur (par exemple en conservant un timbre de voix, une musique d'ambiance, un style cinématographique, etc.).

Par exemple, le moteur d'IA génératif reçoit les segments média de type sous-titre correspondant (ayant l'horodatage du segment média demandé ou un horodatage proche) afin d'en extraite les sous-titres et de les utiliser comme description textuelle complémentaire.

Dans une variante de réalisation, la description textuelle issue des segments média de type sous-titre est utilisée en lieu et place des transcriptions. Cette variante peut notamment être utilisée pour la génération simplifiée de segments de substitution audio.

A noter que pour un segment média demandé, l'unité de substitution 164 peut être configurée pour mettre à disposition plusieurs segments de substitution, par exemple un ou plusieurs segments de substitution comprenant un ou des messages informatifs, un segment de substitution comprenant un compte à rebours et un ou plusieurs segments de substitution générés à partir de la description textuelle. L'unité de substitution 164 ou l'agent de streaming 162 peut choisir l'un d'entre eux en fonction de leurs disponibilités (par exemple en cas d'absence de description textuelle, aucun segment n'est généré par IA) et/ou en fonction de l'information de qualité de connexion obtenue de l'unité de surveillance 163. Par exemple, dans le cas d'une coupure (tunnel) de durée connue, le compte à rebours peut être choisi, alors qu'une interruption non maîtrisée de connexion peut conduire à choisir un message générique d'attente.

Une fois le segment de substitution obtenu, l'agent de streaming 162 est apte à le délivrer au lecteur de contenu 199 concerné (ayant demandé le segment média). Plusieurs modes de réalisation sont décrits ci-après, mettant en œuvre soit une substitution de segment à l'URL du segment média demandé, soit une modification d'URL dans le fichier manifest descriptif de contenu pour rediriger le lecteur de contenu vers le segment de substitution, soit une gestion par fichier manifest de pilotage.

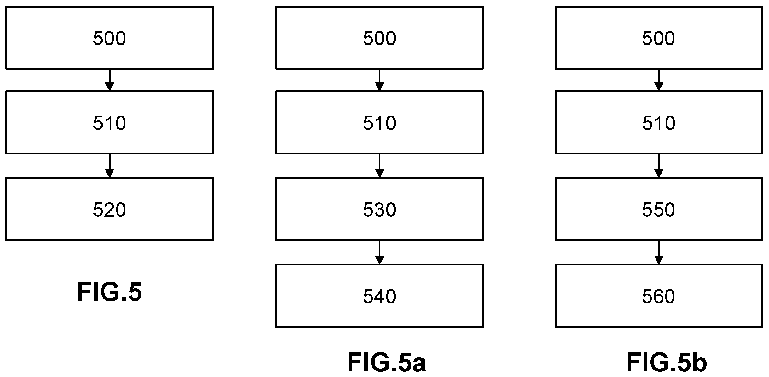

**La** **Figure 5** illustre, à l'aide d'un ordinogramme, des étapes d'un procédé selon des modes de réalisation mettant en oeuvre la substitution de segment à l'URL normal du segment média demandé. Ce procédé peut être mis en œuvre en réaction à la détection d'une qualité de connexion insuffisante, ou par anticipation à une qualité de connexion sur le point de devenir insuffisante (par exemple, tunnel en approche, ou proximité de la fin du cache des segments média pour le contenu en cours de lecture).

Ces étapes sont mises en œuvre par l'agent de streaming 162.

Le procédé commence à l'étape 500 où l'agent de streaming 162 constate (par réaction ou anticipation) qu'il n'est / ne sera pas en mesure de récupérer et délivrer un segment média d'un contenu média en cours de lecture sur un lecteur de contenu 199. Cette étape peut être postérieure à la réception d'une requête unicast du segment média (approche réactive) ou antérieure à la demande du segment média car la piste est en cours de lecture (approche par anticipation).

A l'étape 510, l'agent de streaming 162 obtient, de l'unité de substitution 164, le segment de substitution correspondant au segment média ne pouvant être fourni. Tout type de segment de substitution tel que décrit précédemment est obtenu ici.

A l'étape 520, l'agent de streaming 162 stocke le segment de substitution à l'URL du segment média concerné. Cela permet de renvoyer en réponse à la requête unicast le segment de substitution en remplacement de celui demandé. Préférentiellement, ce stockage est temporaire - pour une substitution temporaire -, soit uniquement le temps de répondre à la requête unicast, soit pendant un temps prédéfini, soit jusqu'au retour d'un état nominal de connexion avec le CDN externe 110.

Ce mode de réalisation est particulièrement adapté aux contenus VOD pour lesquels le lecteur de contenu charge une seul fois le fichier descriptif de piste du contenu média lu. En effet, ce mode de réalisation ne nécessite pas de modifier les fichiers descriptifs.

Dans le cas le plus simple, le segment de substitution est stocké localement dans l'unité de cache 161, signifiant que la piste en cours de lecture est une piste du CDN local instancié par le serveur de cache 160 (correspondant par exemple au nom de domaine dédié « local.server.com » de la **Figure 2a**)**.**

La **Figure 5a** illustre, à l'aide d'un ordinogramme, des étapes d'un procédé selon des modes de réalisation mettant en œuvre une modification d'URL dans le fichier manifest descriptif de contenu pour rediriger le lecteur de contenu vers le segment de substitution. Comme pour la **Figure 5****,** ce procédé peut être mis en œuvre en réaction à la détection d'une qualité de connexion insuffisante, ou par anticipation à une qualité de connexion sur le point de devenir insuffisante (par exemple, tunnel en approche, ou proximité de la fin du cache des segments média pour le contenu en cours de lecture).

Ces étapes sont mises en œuvre par l'agent de streaming 162.

Le procédé commence à l'étape 500 déjà décrite, suivie de l'étape 510 d'obtention du segment de substitution correspondant au segment média ne pouvant être fourni.

A l'étape 530, l'agent de streaming 162 stocke le segment de substitution à un URL de substitution différent de l'URL du segment média concerné. L'URL de substitution est de préférence un URL local, donc de l'unité de cache 161.

A l'étape 540, l'agent de streaming 162 modifie le fichier manifest descriptif de la piste en cours de lecture pour référencer l'URL de substitution en lieu et place de l'URL du segment média concerné, avant transmission du fichier manifest descriptif au lecteur de contenu. On réalise ainsi une redirection du lecteur de contenu, à son insu, vers le segment de substitution. Désormais, le lecteur de contenu ne va plus envoyer une requête de segment à l'URL d'origine du segment média souhaité, mais à l'URL de substitution pour ce segment média, conduisant à la fourniture du segment de substitution.

Ce mode de réalisation est particulièrement adapté aux contenus live pour lesquels le lecteur de contenu recharge fréquemment le fichier descriptif de piste pour être en mesure de récupérer les segments média suivants.

Le fichier manifest descriptif de piste est modifié pour des segments futurs en réaction à un premier segment qui n'a pas pu être fourni, ou en prévision d'une qualité de connexion prédite comme insuffisante dans un futur proche.

Avantageusement, lorsque le fichier descriptif de piste est rechargé au cours du temps, ce dernier peut comprendre une balise EXT-X-DISCONTINUITY (dans HLS) en début et fin de période de substitution, afin de faciliter les transitions (d'un segment média à un segment de substitution, vice et versa) pour le lecteur de contenu 199. Dans DASH, la présence d'une métadonnée de type « Period » contribue à faciliter les transitions.

Le mode de réalisation est également adapté au cas où le fichier descriptif de piste est fourni aux lecteurs de contenu par le serveur de cache 160 et est donc stocké dans l'unité de manifest 169.

La **Figure 5b** illustre, à l'aide d'un ordinogramme, des étapes d'un procédé selon des modes de réalisation mettant en œuvre une gestion par fichier manifest de pilotage (Content Steering). Comme pour la **Figure 5****,** ce procédé peut être mis en œuvre en réaction à la détection d'une qualité de connexion insuffisante, ou par anticipation à une qualité de connexion sur le point de devenir insuffisante (par exemple, tunnel en approche, ou proximité de la fin du cache des segments média pour le contenu en cours de lecture).

Dans ces modes de réalisation, le serveur de cache 160, en plus d'instancier un CDN local pour fournir les contenus média de façon locale, instancie localement un CDN de substitution configuré pour fournir des segments de substitution. Ce CDN de substitution est mis en œuvre de façon similaire au CDN local ; seulement, les segments qu'il renvoie sont des segments de substitution obtenus par l'unité de substitution 164 et non les segments média du contenu média.

Aussi, le fichier descriptif de piste du contenu média en lecture comprend au moins une piste dont les segments (de substitution) sont stockés sur le serveur de cache 160 (par exemple à l'URL « local.server.com ») à des URL de substitution correspondants. Cette piste est associée à un identifiant de chemin dédié, qui permet, via le fichier manifest de pilotage 126, de prioriser ou non les segments de substitution ou d'au moins les déclarer comme CDN local de substitution vers lequel basculer (et donc obtenir les segments de substitution) en cas d'échec de lecture des pistes des CDN externes et locaux.

La **Figure 2b** illustre une piste additionnelle pour l'utilisation du CDN local de substitution, à ajouter dans le fichier manifest racine 200 de la **Figure 2****.** Bien qu'il ne soit illustré qu'une seule piste vidéo, d'autres natures de piste (par exemple audio et sous-titres) et/ou un plus grand nombre de pistes du CDN de substitution peuvent être déclarées. Dans l'exemple de la Figure, la piste vidéo est déclarée en local en définition minimale SD (416x234) avec le fichier manifest de piste « substitution.m3u8 » stocké sur le serveur de cache local « local.server.com » 160. Le CDN local de substitution est associé à l'identifiant de chemin « CDN-SUBS » pour un pilotage par Content Steering.

Le fichier manifest racine 200 peut déjà prévoir cette piste de substitution au niveau du serveur 120. En variante, lorsque le serveur de cache 160 fournit le fichier manifest racine aux terminaux utilisateur embarqués, il peut modifier le fichier récupéré du serveur 120 pour y inclure la piste de substitution avant de le transmettre.

Dans cet exemple, on peut ainsi retrouver au moins deux CDN dans les fichiers manifest racine ayant des identifiants de chemin différents : un (ou plusieurs) CDN correspondant à un CDN local pour servir les segments média originaux (par exemple le CDN local CDN-1 ou le CDN externe CDN-A) et un CDN de substitution pour servir les segments de substitution (CDN-SUBS). De plus, des pistes du CDN (externe) 110 peuvent également être ajoutées pour permettre notamment au lecteur de contenu de continuer à lire un contenu même en sortant du véhicule 150.

Le procédé de la **Figure 5b** est mis en œuvre par l'agent de streaming 162.

Le procédé commence à l'étape 500 déjà décrite, suivie de l'étape 510 d'obtention du segment de substitution correspondant au segment média ne pouvant être fourni.

A l'étape 550, l'agent de streaming 162 stocke le segment de substitution à l'URL de substitution du CDN local de substitution.

A l'étape 560, l'agent de streaming 162 modifie le fichier manifest de pilotage pour y indiquer l'identifiant de chemin « CDN-SUBS » du CDN de substitution afin que le lecteur recevant ce fichier de pilotage soit en mesure au moins de basculer sur le CDN de substitution s'il n'est pas en mesure de lire le contenu depuis les autres CDN (local ou externe).

De préférence, l'identifiant de chemin « CDN-SUBS » est indiqué en premier dans le fichier manifest de pilotage, forçant le lecteur de contenu à basculer directement sur les segments de substitution. C'est par exemple le cas de la **Figure 4a** montrant un fichier manifest de pilotage déclarant seulement le CDN de substitution.

A la fin de la période nécessitant des substitutions, le fichier manifest de pilotage est modifié pour revenir à la situation nominale, par exemple sans l'identifiant « CDN-SUBS » mais avec l'identifiant du CDN local (CDN-1) ou externe (CDN-A) servant les segments média originaux ou les deux.

Préférentiellement, la fréquence de rafraichissement du fichier manifest de pilotage est fixée à la durée d'un segment média pour offrir une réactivité maximale. Bien entendu, une fréquence de rafraichissement correspondant à plusieurs segments média est possible.

Ce mode de réalisation peut être efficacement mis en œuvre lorsque le fichier manifest de pilotage est servi par le serveur de cache 160 (par l'unité de manifest 169) aux lecteurs de contenu embarqués.

En variante, un identifiant de chemin principal d'un CDN servant les segments média originaux, par l'identifiant de chemin d'un CDN local (CDN-1) ou externe (CDN-A), est indiqué avant l'identifiant de chemin de substitution « CDN-SUBS » dans le fichier manifest de pilotage. C'est par exemple le cas de la **Figure 4b** montrant un fichier manifest de pilotage déclarant prioritairement le CDN local CDN-1 puis le CDN de substitution CDN-SUBS pour le cas où le CDN local ne soit pas en mesure de fournir les segments demandés. La **Figure 4c** montre un autre fichier manifest de pilotage déclarant prioritairement le CDN local CDN-1 puis le CDN externe CDN-A et enfin le CDN de substitution CDN-SUBS pour le cas où le lecteur de contenu bascule d'abord sur le CDN externe si le CDN local n'est plus opérationnel, et finalement bascule sur le CDN de substitution si le CDN externe n'est également pas accessible.

Dans ces variantes, nul besoin de modifier (étape 560) le fichier manifest de pilotage, le lecteur de contenu basculant automatiquement vers le CDN de substitution.

Les modes de réalisation de la **Figure 5b** facilitent nativement les transitions vers les segments de substitution, car ils mettent en œuvre un mécanisme intégré au lecteur de contenu 199.

Dans un autre mode de réalisation en lien avec la **Figure 5b****,** plusieurs CDN de substitution peuvent être instanciés sur le serveur de cache 160 (voir plusieurs serveurs embarqués) pour fournir différents types de segments de substitution. Par exemple, un premier CDN de substitution peut servir des segments de substitution générée par moteur d'IA générative. Un autre CDN de substitution peut servir des segments de substitution comportant un message statique « Absence de réseau pour raison de tunnel ». Un autre CDN peut servir des segments de substitution comportant un message statique « Chaine non disponible actuellement, merci de sélectionner une autre chaine ». Encore un autre CDN peut servir des segments de substitution comportant un compte à rebours. Ces exemples ne sont pas limitatifs.

Chaque CDN de substitution dispose de son propre identifiant de chemin de substitution (par exemple CDN-SUBS1, CDN-SUBS2, etc.), et des pistes pour plusieurs CDN de substitution sont déclarées dans le fichier descriptif racine. Aussi, en indiquant l'un ou l'autre des identifiants de chemin de substitution dans le fichier manifest de pilotage, le serveur de cache 160 est capable de rediriger le lecteur de contenu vers un type particulier de message de substitution à afficher.

A cet effet, l'agent de streaming 162 peut, à l'étape 540, sélectionner un des identifiants de chemin de substitution ou un ordre d'identifiants de chemin de substitution en fonction de l'information de qualité de connexion obtenue de l'unité de surveillance 163 et/ou de la disponibilité des segments de substitution dans les CDN de substitution correspondants, et puis indiquer l'identifiant ou l'ordre sélectionné dans le fichier manifest de pilotage,

Ce mode de réalisation offre en outre au serveur de cache 160 la possibilité de changer de type de message au fur et mesure d'un changement de situation vécue par le véhicule 150.

La **Figure 4d** montre par exemple un fichier manifest de pilotage déclarant prioritairement un premier CDN de substitution CDN-SUBS3 (par exemple pour des segments de substitution générés par IA) et un deuxième CDN de substitution CDN-SUBS1 (par exemple pour des segments de substitution de type message statique). Le lecteur de contenu 199 bascule ainsi prioritairement sur le CDN de substitution lui délivrant des segments générés par IA, et en l'absence de ceux-ci bascule sur le CDN de substitution lui délivrant des messages statiques.

A noter que des CDN local et/ou externe peuvent également être déclarés comme sur les **Figure 4b et Figure 4c****.** Par exemple, le fichier manifest de pilotage peut déclarer le CDN local CDN-1 puis le CDN externe CDN-A et enfin le ou les CDN de substitution.

Les modes de réalisation des **Figure 5** (ou 5a) et **Figure 5b** peuvent coexister. Par exemple, il peut être choisi de privilégier la fourniture des segments de substitution via les URL demandés (soit l'URL d'origine - **Figure 5** - soit l'URL modifié - **Figure 5a**). Néanmoins, si l'agent de streaming 162 n'a pu obtenir les segments de substitution et les stocker aux URL pertinents à temps (time out), le lecteur de contenu peut passer sur d'autres qualités (qui sont également en erreur) jusqu'à atteindre un CDN de substitution (**Figure 5b**).

Quel que soit le mode de réalisation, lorsqu'un lecteur de contenu embarqué 199 demande un segment média au serveur de cache 160, ce dernier lui retourne soit le segment média demandé, soit un segment de substitution sans même savoir que ce dernier n'est pas l'original.

D'un point de vue lecteur de contenu, le lecteur joue le segment média demandé sans entrer en erreur, même s'il s'agit d'un segment de substitution.

D'un point de vue utilisateur, la vidéo et/ou l'audio et/ou les sous-titres rendus par le lecteur de contenu ne correspondent plus à ceux du contenu média original, mais permettent à l'utilisateur de continuer la lecture (via les segments de substitution générés par IA) ou d'être informé de la situation, sans erreur du lecteur.

Ainsi, puisque le lecteur de contenu n'a pas conscience du problème de connexion survenant, il poursuit la lecture du contenu comme si de rien n'était, et lorsque la situation redevient nominale, la bonne vidéo, audio, sous-titre est rendue à l'utilisateur.

En résumé, l'invention permet d'améliorer l'expérience utilisateur, tant pour la lecture en direct que à la demande, en expliquant la situation de connexion défaillante et pourquoi la lecture du contenu média original n'est pas possible, en indiquant éventuellement via un compte à rebours quand la situation sera résolue, en évitant que le lecteur de contenu ne tombe en erreur, et/ou possiblement en poursuivant la lecture via une vidéo, audio ou sous-titre générée par IA.

Les modes de réalisation décrits ci-dessus prévoient que l'agent de streaming 162 est entièrement hébergé dans le serveur de cache 160.

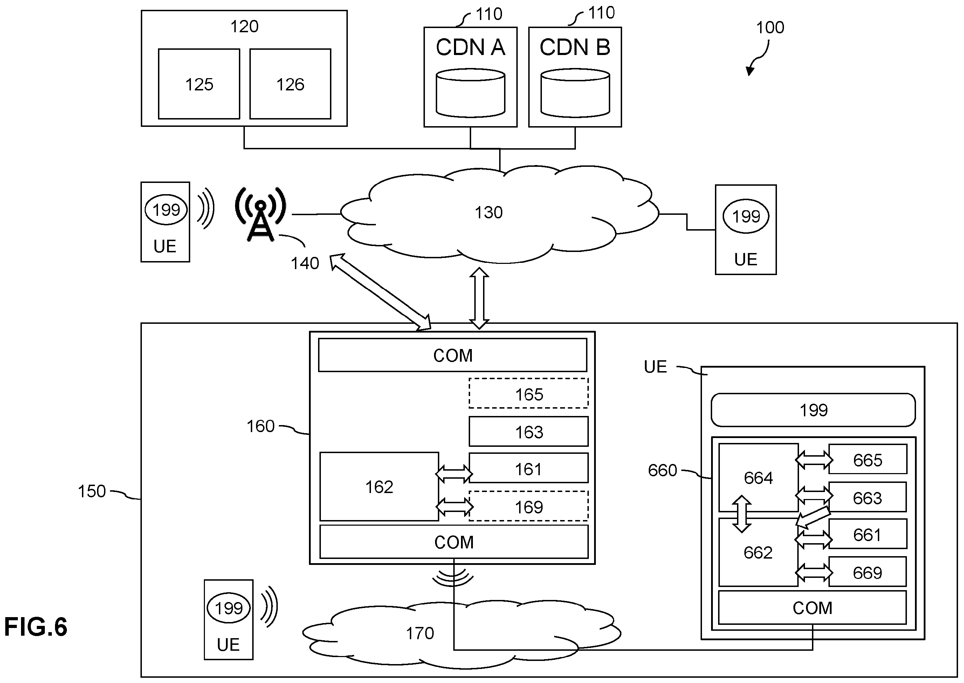

D'autres modes de réalisation peuvent prévoir de reporter certaines briques techniques dans le l'équipement utilisateur UE plutôt que dans l'infrastructure partagée du véhicule, comme illustré par la **Figure 6****.** En particulier, un agent de streaming est embarqué dans le même équipement utilisateur UE que le lecteur de contenu. En d'autres termes, il est possible de gérer le remplacement de segments média originaux par des segments de substitution directement au niveau de l'équipement utilisateur. En particulier, cette approche peut tirer bénéfice de la puissance de calcul des équipements utilisateurs pour générer des segments de substitution par IA générative.

Le système comporte toujours un serveur de cache 160 instanciant, via l'agent de streaming 162, un CDN local de diffusion unicast de segments média correspondant aux contenus accessibles localement dans l'unité de cache 161. L'agent de streaming 162 est donc toujours en charge de délivrer les segments média originaux aux équipements utilisateur.

Le serveur de cache 160 comporte également l'unité de surveillance 163, dont les informations de qualité de connexion peuvent être communiquées (directement ou par l'agent de streaming 162) aux équipements utilisateur embarqués.

L'équipement utilisateur UE comprend, outre le lecteur de contenu 199, un module de proxy 660 comprenant un agent de streaming 662 en lien avec une unité de cache 661, une unité de manifest 669, une unité de surveillance 663, une unité de substitution 664 et une unité de description 665.

L'agent de streaming 662 instancie un CDN local à l'équipement utilisateur (ci-après CDN utilisateur). L'agent de streaming 662 est en charge de la récupération des segments média restants d'une piste en cours de lecture, auprès du CDN local instancié par le serveur de cache embarqué 160, via le réseau de communication 170. Les segments récupérés sont stockés dans l'unité de cache 661 pour mise à disposition locale (interne à l'équipement utilisateur) du lecteur de contenu 199, via le CDN utilisateur instancié. L'agent de streaming 662 transmet donc un segment en réponse à chaque requête du lecteur de contenu 199.

De préférence, l'agent de streaming 662 s'emploie à précharger l'ensemble des segments média manquants d'un contenu média en cours de lecture, directement auprès du CDN externe 110 ou indirectement via le CDN local 160 (qui lui-même les obtient du CDN externe 110).

L'unité de manifest 669, similaire à l'unité 169, récupère (directement du serveur 120 ou via l'unité de manifest 169) et modifie, le cas échéant, les fichiers descriptifs 125, 126 pour les mettre à disposition locale du lecteur de contenu 199. Les modifications peuvent comporter, de façon similaire à ce qui a été décrit ci-dessus, l'ajout de pistes référençant l'URL du CDN local à l'équipement utilisateur et/ou la modification d'URL dans les fichiers descriptifs racine, la modification des identifiants de chemin dans les fichiers manifest de pilotage. Il faut comprendre que dans les fichiers descriptifs, lorsque dans les modes de réalisation précédents (Figures 1 à 5) l'URL pointait sur le CDN local du serveur de cache 160, ici l'URL pointe vers le proxy local 660. Les URL qui pointaient vers un CDN externe 110 continuent de pointer vers le serveur externe.

L'unité de surveillance 663 récupère en temps réel (directement ou par l'agent de streaming 162) les informations de qualité de connexion générées par l'unité de surveillance 163. Une partie des traitements de l'unité de surveillance 163 peut être déportée dans l'unité de surveillance 663. Par exemple, l'unité de surveillance 163 peut fournir le statut de connexion avec le CDN 110 et/ou la bande passante disponible avec le CDN 110 et/ou la une bande passante allouée à un contenu média donné, et c'est l'unité de surveillance 663 qui détermine une ou plusieurs informations de qualité de connexion à partir de ces informations.

Le service de surveillance offert par l'unité de surveillance 163 (de façon autonome ou via l'agent de streaming 162) peut être instancié sous forme de serveur de surveillance et découvert par l'équipement utilisateur UE en utilisant tout protocole de découverte de service, par exemple le protocole mDNS Bonjour.

L'unité de description 665 est configurée pour récupérer (directement ou via l'agent de streaming 162) du CDN 110 ou de l'unité de description 165 les descriptions textuelles des segments média ou contenu média. Le stockage des descriptions textuelles dans l'unité de description 165 et la récupération de ceux-ci depuis l'unité de description 165 présentent l'avantage d'une résilience aux interruptions de connexion.

L'unité de substitution 664 est similaire à l'unité de substitution 164 pour générer et/ou fournir des segments de substitution à l'agent de streaming 662, comme décrit plus haut. A ce titre, elle peut réaliser des générations multimodales de segments de substitution, i.e., se basant également sur d'autres segments média du même contenu.

L'agent de streaming 662 peut dès lors mettre en œuvre les procédés décrits ci-dessus, en particulier ceux des **Figures 5, 5a** et **5b****.**

Selon l'état de la connexion tel qu'il ressort de l'information de qualité de connexion, l'agent de streaming 662 soit ne pilote aucune substitution de segment média, soit décide qu'un ou des media segments doivent être substitués. Selon la situation et le mode de réalisation, l'agent de streaming 662 peut retourner le segment de substitution en lieu et place du segment média demandé à l'URL d'origine, ou il peut modifier l'URL dans le fichier manifest descriptif de contenu pour rediriger le lecteur de contenu vers le segment de substitution, ou il peut encore rediriger le lecteur de contenu vers un CDN de substitution (mis en œuvre dans l'agent de streaming 662) en modifiant le fichier manifest de pilotage.

Bien entendu, la présente invention ne se limite pas aux formes de réalisation décrites ci-avant à titre d'exemples ; elle s'étend à d'autres variantes. D'autres réalisations sont possibles.

S'il est principalement fait référence à des environnements mobiles de type transport en commun pour lesquels la qualité de la liaison de communication avec les CDN externes est susceptible de varier, d'autres environnements collectifs non mobiles, tels un aéroport, une gare ou même une résidence particulière peuvent être concernés.

## Revendications

1. Système (100) de streaming de contenus média stockés sur un serveur de diffusion en continu (110), le système comprenant un agent de streaming (162, 662) configuré pour obtenir des segments média de contenu média du serveur de diffusion et pour transmettre, via un réseau de communication (170), un segment média en réponse à chaque requête de segment média par un lecteur de contenu (199) en cours de lecture d'un contenu média, système dans lequel le segment média transmis est un segment de substitution dont le contenu média diffère de celui en cours de lecture tel que stocké sur le serveur de diffusion en continu, lorsqu'une qualité de connexion avec le serveur de diffusion en continu est insuffisante.

2. Système (100) selon la revendication 1, dans lequel le segment de substitution est stocké à un localisateur uniforme de ressource (URL) d'un segment média demandé par le lecteur de contenu, l'URL étant indiqué dans un fichier manifest descriptif du contenu média en cours de lecture.

3. Système (100) selon la revendication 2, dans lequel l'agent de streaming est configuré pour recevoir un premier fichier manifest descriptif du contenu média en cours de lecture et, lorsque la qualité de connexion avec le serveur de diffusion en continu est insuffisante, pour :
stocker le segment de substitution à un localisateur uniforme de ressource (URL) indiqué dans le fichier manifest reçu, au lieu d'un segment média dont le contenu média est celui en cours de lecture tel que stocké sur le serveur de diffusion en continu, ou
modifier le fichier manifest reçu pour y référencer un URL de substitution en lieu et place d'un URL de segment média dont le contenu média est celui en cours de lecture tel que stocké sur le serveur de diffusion en continu, avant transmission du fichier manifest descriptif modifié au lecteur de contenu, le segment de substitution étant stocké à l'URL de substitution.

4. Système (100) selon la revendication 2, dans lequel le segment de substitution est stocké à un localisateur uniforme de ressource (URL) de substitution déclaré dans le fichier manifest descriptif du contenu média (125), en lien avec une piste descriptive associée à un identifiant de chemin de substitution (CDN-SUBS) différent d'un identifiant de chemin principal (CDN-1, CDN-A) associé à une autre piste descriptive (220, 221, 230, 231, 232, 233) référençant un URL de segment média dont le contenu média est celui en cours de lecture tel que stocké sur le serveur de diffusion en continu, et un fichier manifest de pilotage (126) indiquant l'identifiant de chemin de substitution est transmis au lecteur de contenu (199) lorsque la qualité de connexion avec le serveur de diffusion en continu est insuffisante.

5. Système (100) selon la revendication 4, dans lequel l'identifiant de chemin de substitution est indiqué en premier dans le fichier manifest de pilotage ou est indiqué après l'identifiant de chemin principal dans le fichier manifest de pilotage.

6. Système (100) selon la revendication 4, dans lequel une pluralité de segments alternatifs de substitution sont stockés à des URL de substitution respectifs et déclarés dans le fichier manifest descriptif, en lien avec des pistes descriptives respectives associées à des identifiants de chemin de substitution différents,
l'agent de streaming (162, 662) étant configuré pour sélectionner un identifiant de chemin de substitution ou un ordre d'identifiants de chemin de substitution en fonction d'une information de qualité de connexion et/ou d'une disponibilité d'un segment alternatif de substitution, et pour indiquer l'identifiant ou l'ordre sélectionné dans le fichier manifest de pilotage,

7. Système (100) selon l'une des revendications 1 à 6, dans lequel le système comprend une unité de description (165, 665) configurée pour obtenir une description textuelle du contenu média en cours de lecture, et une unité de substitution (164, 664) configurée pour générer un segment de substitution à partir de la description textuelle, et optionnellement à partir d'un ou plusieurs autres segments média du contenu média.

8. Système (100) selon l'une des revendications 1 à 6, dans lequel un segment de substitution comprend un message informatif ou un compte à rebours, corrélé à l'information de qualité de connexion.

9. Système (100) selon la revendication précédente, comprenant une unité de surveillance (163, 663) embarquée dans un véhicule (150) et configurée pour déterminer une durée d'interruption de connexion avec le serveur de diffusion en continu, ledit compte à rebours étant défini par rapport à la durée d'interruption.

10. Système (100) selon l'une des revendications 1 à 6, dans lequel l'agent de streaming est configuré pour sélectionner un segment de substitution parmi la liste suivante, en fonction d'une information de qualité de connexion et/ou d'une disponibilité des segments de substitution de la liste :
un segment de substitution comprenant un message informatif,
un segment de substitution comprenant un compte à rebours, et
un segment de substitution généré à partir de la description textuelle du contenu média en cours de lecture, et optionnellement à partir également d'un ou plusieurs autres segments média du contenu média.

11. Système (100) selon l'une des revendications 1 à 10, dans lequel l'agent de streaming (162) est hébergé dans un serveur de cache (160) embarqué dans un véhicule (150), et le lecteur de contenu (199) est embarqué dans un équipement utilisateur (UE) connecté au serveur de cache via un réseau local (170) du véhicule.

12. Système (100) selon l'une des revendications 1 à 10, dans lequel l'agent de streaming est embarqué dans le même équipement utilisateur que le lecteur de contenu.

13. Système (100) selon l'une des revendications précédentes, comprenant une unité de surveillance (163) embarquée dans un véhicule (150) et configurée pour déterminer une information de qualité de connexion entre le véhicule et le serveur de diffusion en continu et transmettre l'information de qualité de connexion à l'agent de streaming.

14. Procédé de streaming de contenus média stockés sur un serveur de diffusion en continu (110), le procédé comprenant, au niveau d'un agent de streaming (162, 662), les étapes suivantes :
obtenir des segments média de contenu média du serveur de diffusion ; et
transmettre, via un réseau de communication, un segment média en réponse à chaque requête de segment média par un lecteur de contenu en cours de lecture d'un contenu média, procédé dans lequel le segment média transmis est un segment de substitution dont le contenu média diffère de celui en cours de lecture tel que stocké sur le serveur de diffusion en continu, lorsqu'une qualité de connexion avec le serveur de diffusion en continu est insuffisante

15. Support d'enregistrement non transitoire lisible par un ordinateur sur lequel est enregistré un programme pour la mise en œuvre du procédé selon la revendication 14, lorsque ce programme est exécuté par un processeur.
